# FASCICULE DE BREVET EUROPEEN

(11) **EP 3 834 010 B1**
(45) Date de publication et mention de la délivrance du brevet: **11.12.2024**
(21) Numéro de dépôt: 18778958.1
(22) Date de dépôt: 10.08.2018
(51) Int. Cl.: G01S 13/931, B64F 1/32, B64F 1/30

(54) **SYSTEME ELECTRONIQUE DE CONTRÔLE DE L'ACCOSTAGE D'UN VEHICULE A UNE ZONE D'ACCOSTAGE, ET PROCEDE CORRESPONDANT**
ELEKTRONISCHES SYSTEM ZUR STEUERUNG DES ANDOCKENS EINES FAHRZEUGS MIT EINEM ANDOCKBEREICH UND ZUGEHÖRIGES VERFAHREN
ELECTRONIC SYSTEM FOR CONTROLLING THE DOCKING OF A VEHICLE WITH A DOCKING AREA, AND CORRESPONDING METHOD

(43) Date de publication de la demande: 16.06.2021
(73) Titulaire: TLD Europe, 79420 Reffannes (FR)
(72) Inventeur: DECOUX, Laurent, 37100 Tours (FR); BESSE, Charles, 37300 Joue Les Tours (FR)
(74) Mandataire: Tranvouez, Edern Morgan
(86) Numéro de dépôt international: PCT/FR2018/052059
(87) Numéro de publication internationale: WO 2020/030857

(56) Documents cités:
- EP-A1- 3 293 121
- WO-A1-2014/154860
- WO-A1-2017/137241
- US-A- 5 170 352
- US-A1- 2005 198 750

## Description

La présente invention concerne un système électronique de contrôle de l'accostage automatique ou semi-automatique d'un véhicule à une zone d'accostage. Elle trouve notamment une application à l'accostage d'un véhicule aéroportuaire, désigné communément par l'abréviation anglaise GSE (Ground Support Equipment), au fuselage d'un aéronef. Il peut s'agir par exemple d'un chargeur de bagages à bande, d'un véhicule de restauration, etc...

Ces véhicules aéroportuaires assurent le service des aéronefs, en particulier les avions, sur l'aire de service des aéroports entre deux vols, et sont donc amenés à évoluer à leur proximité immédiate. Certains de ces véhicules sont amenés à accoster l'aéronef, ce qui est le cas notamment des chargeurs de bagages à bande pour avions.

Il convient cependant d'éviter que ces véhicules n'entrent en contact trop brutalement avec le fuselage de l'aéronef afin de ne pas l'endommager.

Afin de sécuriser l'accostage des véhicules aux aéronefs, des procédures sont prévues, qui prévoient par exemple la limitation de la vitesse du véhicule à l'approche de l'aéronef, dans le but de réduire ou supprimer tout risque de dommage au fuselage de l'aéronef en cas de contact accidentel.

La manoeuvre d'accostage demande donc une très grande précision, non seulement pour éviter d'endommager l'aéronef comme expliqué plus haut, mais aussi pour garantir la bonne mise en oeuvre de la fonction assurée par le véhicule de service, telle que la fonction de chargement des bagages dans l'aéronef.

Un des buts de l'invention est donc de résoudre notamment les problèmes précités. Ainsi, l'invention a notamment pour objectif de proposer un système et un procédé de contrôle de l'accostage d'un véhicule à une zone d'accostage, automatique ou semi-automatique, permettant un accostage précis et sécurisé.

Constituant l'état de la technique relatif à la présente demande, ont été cités les documents antérieurs suivants : WO 2014154860 ; US20050198750, US5170352, EP 3293121 et WO 2017137241. Aucun de ces documents n'a pour objet un système dans lequel des moyens de détermination sont aptes à déterminer une ligne d'accostage passant par un point cible situé sur la surface de la zone d'accostage et perpendiculaire à cette surface, de sorte que la trajectoire de guidage du véhicule vers la zone d'accostage se termine par une portion finale de ladite ligne d'accostage d'une longueur supérieure ou égale à un seuil déterminé, de préférence supérieure ou égale à 2 mètres, les moyens de détermination étant aptes à déterminer la trajectoire pour rejoindre la portion finale de la ligne d'accostage en ajustant ladite trajectoire à différents moments.

L'invention a ainsi pour objet, selon un premier aspect, un système électronique de contrôle de l'accostage d'un véhicule, tel qu'un véhicule aéroportuaire, à une zone d'accostage donnée d'une destination d'accostage telle qu'un aéronef ou un bâtiment, par exemple une porte d'un aéronef, la zone d'accostage donnée comprenant au moins une cible, le système comprenant des premiers moyens de détermination configurés pour déterminer la position de la zone d'accostage par détermination du type de la cible parmi un ensemble de types donnés et de sa position, des deuxièmes moyens de détermination configurés pour déterminer une trajectoire de guidage du véhicule vers la zone d'accostage donnée fonction de la position de ladite zone d'accostage, et des troisièmes moyens de détermination configurés pour déterminer le type de la destination d'accostage, les deuxièmes moyens de détermination étant aptes à déterminer une ou plusieurs zones d'exclusion en fonction du type de la destination d'accostage, par comparaison du type de la destination d'accostage avec des types de destination d'accostage, stockés dans une base de données en association avec des zones d'exclusion, de sorte que la trajectoire de guidage du véhicule vers la zone de d'accostage donnée ne passe dans aucune desdites zones d'exclusion,
système dans lequel les deuxièmes moyens de détermination sont aptes à déterminer une ligne d'accostage passant par un point cible situé sur la surface de la zone d'accostage et perpendiculaire à cette surface, de sorte que la trajectoire de guidage du véhicule vers la zone d'accostage se termine par une portion finale de ladite ligne d'accostage d'une longueur supérieure ou égale à un seuil déterminé, supérieure ou égale à 2 mètres, les deuxièmes moyens de détermination étant aptes à déterminer la trajectoire pour rejoindre la portion finale de la ligne d'accostage en ajustant ladite trajectoire à différents moments déterminés, en vue, à chacun desdits moments:
- d'aligner le train arrière du véhicule avec la ligne d'accostage dans le cas où ledit véhicule se trouve à une distance supérieure à une distance donnée de la ligne d'accostage ;
- d'aligner le train avant du véhicule avec la ligne d'accostage dans le cas où ledit véhicule se trouve à une distance inférieure à la distance donnée de la ligne d'accostage ;
- de conserver la trajectoire déterminée au moment précédent, si le niveau de confiance dans la localisation des cibles déterminé par les premiers moyens de détermination est inférieur à un seuil donné, ou si les premiers moyens de détermination ne détectent plus les cibles.

Suivant certains modes de réalisation, le système comprend en outre une ou plusieurs des caractéristiques suivantes, prise(s) isolément ou suivant toutes les combinaisons techniquement possibles :
- la zone d'accostage donnée étant une zone d'accostage d'une destination d'accostage d'un aéronef ou d'un bâtiment, caractérisé en ce que les premiers moyens de détermination sont aptes à déterminer une représentation tridimensionnelle de la destination d'accostage, et à réaliser une ou plusieurs mesures dans ladite représentation tridimensionnelle, pour déterminer la position de la zone d'accostage ;
- les premiers moyens de détermination sont aptes à comparer les mesures avec des mesures stockées dans une base de données, pour en déduire le contour de la zone d'accostage et sa position relativement à au moins une autre zone de la destination d'accostage ;
- les premiers moyens de détermination sont aptes à déterminer la taille et/ou la forme de la cible, à comparer la taille et/ou la forme déterminée avec des tailles et/ou formes stockées dans une base de données en association avec des types de cible également stockés dans ladite base de données, pour en déduire le type de la cible ;
- les premiers moyens de détermination comprennent un dispositif de vision bidimensionnelle apte à déterminer la taille et/ou la forme de la cible et des moyens de détermination de la distance entre les premiers moyens de détermination et la cible ;
- les moyens de détermination de la distance comprennent un dispositif de vision tridimensionnelle ou un capteur de distance tel qu'un capteur laser, à ultrason ou radar ;
- la zone d'accostage donnée étant une zone d'accostage d'une destination d'accostage d'un aéronef ou d'un bâtiment, et le système comprend des troisièmes moyens de détermination configurés pour déterminer le type de la destination d'accostage et/ou le type de la zone d'accostage ;
- les deuxièmes moyens de détermination sont aptes à mesurer l'alignement entre le véhicule et la zone d'accostage par analyse d'au moins une partie du profil de la destination d'accostage, tel que la ligne de fuselage de l'aéronef, à proximité de la cible, et à déterminer le point en fonction du type de la destination d'accostage et/ou de la zone d'accostage ;
- la zone d'accostage donnée comprend au moins deux cibles, et le point est situé à égale distance desdites cibles ;
- les deuxièmes moyens de détermination sont aptes à ajuster la trajectoire à chacun des moments déterminés, et dans le cas où le véhicule se trouve à une distance supérieure à la distance donnée de la ligne d'accostage, en :
   - déterminant un point cible sur la ligne d'accostage ;
   - définissant une trajectoire pour permettre au véhicule de rejoindre le point cible ;
- la détermination du point cible est fonction de la distance longitudinale entre le véhicule et la zone d'accostage, de la distance latérale entre le véhicule et la ligne d'accostage, et de l'angle entre l'axe longitudinal du véhicule et la ligne d'accostage.
- la trajectoire pour permettre au véhicule de rejoindre le point cible forme un arc de cercle allant du centre du train arrière du véhicule au point cible et de rayon déterminé par la formule (X² + Y²) / (2 × Y), avec X et Y correspondant aux coordonnées du point cible par rapport au centre du train arrière du véhicule ;
- les deuxièmes moyens de détermination sont aptes à ajuster la trajectoire à chacun des moments déterminés, et dans le cas où le véhicule se trouve à une distance inférieure à la distance donnée de la ligne d'accostage, en orientant les roues du train avant du véhicule selon un angle dépendant de la distance entre le centre dudit train avant et la ligne d'accostage.

Selon un deuxième aspect, l'invention a également pour objet un véhicule, tel qu'un véhicule aéroportuaire, comprenant des moyens de roulement aptes à permettre la mise en mouvement du véhicule par roulement, des moyens de direction aptes à permettre d'orienter la mise en mouvement dans une direction donnée, et un système électronique de contrôle d'accostage tel que présenté ci-dessus, les moyens de roulement étant reliés par les moyens de direction au système de contrôle, en sorte de permettre le guidage du véhicule sur la trajectoire déterminée par les deuxièmes moyens de détermination dudit système de contrôle.

Dans un mode de réalisation, les moyens de roulement comprennent un train avant, et le système de contrôle est relié aux moyens de roulement par les moyens de direction en sorte de permettre le guidage du véhicule par contrôle du train avant.

Selon un troisième aspect, l'invention a encore pour objet un procédé de contrôle de l'accostage d'un véhicule, tel qu'un véhicule aéroportuaire, à une zone d'accostage, donnée d'une destination d'accostage d'un aéronef ou d'un bâtiment, par exemple une porte d'un aéronef, la zone d'accostage donnée comprenant au moins une cible, le procédé comprenant une première étape de détermination de la position de la zone d'accostage par détermination du type de la cible parmi un ensemble de types donnés et de sa position, une deuxième étape de détermination d'une trajectoire de guidage du véhicule vers la zone d'accostage fonction du type et de la position de ladite cible, et une troisième étape de détermination du type de la destination d'accostage, la deuxième étape de détermination comprenant la détermination d'une ou plusieurs zones d'exclusion en fonction du type de la destination d'accostage, par comparaison du type de la destination d'accostage avec des types de destination d'accostage, stockés dans une base de données en association avec des zones d'exclusion, de sorte que la trajectoire de guidage du véhicule vers la zone de d'accostage donnée ne passe dans aucune desdites zones d'exclusion,
caractérisé en ce qu'au cours de la deuxième étape de détermination, on détermine une ligne d'accostage passant par un point situé sur la surface de la zone d'accostage et perpendiculaire à cette surface, de sorte que la trajectoire de guidage du véhicule vers la zone d'accostage se termine par une portion finale de la ligne d'accostage d'une longueur supérieure ou égale à un seuil déterminé, supérieure ou égale à 2 mètres, et en ce qu'au cours de la deuxième étape de détermination, on détermine la trajectoire pour rejoindre la portion finale de la ligne d'accostage en ajustant ladite trajectoire à différents moments déterminés, en vue, à chacun desdits moments :
- d'aligner le train arrière du véhicule avec la ligne d'accostage dans le cas où ledit véhicule se trouve à une distance supérieure à une distance donnée de la ligne d'accostage ;
- d'aligner le train avant du véhicule avec la ligne d'accostage dans le cas où ledit véhicule se trouve à une distance inférieure à la distance donnée de la ligne d'accostage ;
- de conserver la trajectoire déterminée au moment précédent, si le niveau de confiance dans la localisation des cibles lors de la première étape de détermination est inférieur à un seuil donné, ou si les cibles ne sont plus détectées.

Suivant certains modes de mise en oeuvre, le procédé comprend en outre une ou plusieurs des caractéristiques suivantes, prise(s) isolément ou suivant toutes les combinaisons techniquement possibles :
- la zone d'accostage est une zone d'accostage d'une destination d'accostage, et, au cours de la première étape de détermination, on détermine une représentation tridimensionnelle de la destination d'accostage, et on réalise une ou plusieurs mesures dans ladite représentation tridimensionnelle, pour déterminer la position de la zone d'accostage ;
- au cours de la première étape de détermination, on compare les mesures avec des mesures stockées dans une base de données, pour en déduire le contour de la zone d'accostage et sa position relativement à au moins une autre zone de la destination d'accostage ;

- au cours de la première étape de détermination, on détermine la taille et/ou la forme de la cible, on compare la taille et/ou la forme déterminée avec des tailles et/ou formes stockées dans une base de données en association avec des types de cible également stockés dans ladite base de données, pour en déduire le type de la cible ;
- au cours de la deuxième étape de détermination, on mesure l'alignement entre véhicule et la zone d'accostage par analyse d'au moins une partie du profil de la destination d'accostage, tel que la ligne de fuselage de l'aéronef, à proximité de la cible ;
- la zone d'accostage comprend au moins deux cibles, le point étant situé à égale distance desdites cibles ;
- au cours de la deuxième étape de détermination, on détermine la trajectoire pour rejoindre la portion finale de la ligne d'accostage en ajustant ladite trajectoire à différents moments déterminés, en vue, à chacun desdits moments :
   - d'aligner le train arrière du véhicule avec la ligne d'accostage dans le cas où ledit véhicule se trouve à une distance supérieure à une distance donnée de la ligne d'accostage ;
   - d'aligner le train avant du véhicule avec la ligne d'accostage dans le cas où ledit véhicule se trouve à une distance inférieure à la distance donnée de la ligne d'accostage ;
   - de conserver la trajectoire déterminée au moment précédent, si le niveau de confiance dans la localisation des cibles lors de la première étape de détermination est inférieur à un seuil donné, ou si les cibles ne sont plus détectées ;

   - au cours de la deuxième étape, à chacun des moments déterminés, et dans le cas où le véhicule se trouve à une distance supérieure à la distance donnée de la ligne d'accostage, on ajuste la trajectoire en :
      - déterminant un point cible sur la ligne d'accostage ;
      - en définissant une trajectoire pour permettre au véhicule de rejoindre le point cible ;
      - la détermination du point cible est fonction de la distance longitudinale entre le véhicule et la zone d'accostage, de la distance latérale entre le véhicule et la ligne d'accostage, et de l'angle entre l'axe longitudinal du véhicule et la ligne d'accostage ;
      - la trajectoire pour permettre au véhicule de rejoindre le point cible forme un arc de cercle allant du centre du train arrière du véhicule au point cible et de rayon déterminé par la formule (X² + Y²) / (2 × Y), avec X et Y correspondant aux coordonnées du point cible par rapport au centre du train arrière du véhicule ;

   - au cours de la deuxième étape de détermination, à chacun des moments déterminés, et dans le cas où le véhicule se trouve à une distance inférieure à la distance donnée de la ligne d'accostage, on ajuste la trajectoire en orientant les roues du train avant du véhicule selon un angle dépendant de la distance entre le centre dudit train avant et la ligne d'accostage.

Ainsi, le guidage automatique ou semi-automatique du véhicule équipé du système de l'invention permet un accostage précis et sécurisé au fuselage de l'aéronef, et une mise en oeuvre efficace de la fonction assurée par le véhicule.

Le système détermine la meilleure trajectoire pour accoster l'aéronef, et guide le véhicule en conséquence.

Les caractéristiques et avantages de l'invention apparaitront à la lecture de la description qui va suivre, donnée uniquement à titre d'exemple, et non limitative, en référence aux figures annexées suivantes :
- figure 1 : représentation schématique d'un exemple de véhicule, en l'occurrence un véhicule aéroportuaire, en cours d'accostage à une destination d'accostage, en l'occurrence un aéronef ;
- figure 2 : représentation schématique d'une partie des premiers moyens de détermination du système de contrôle de l'invention, selon un premier exemple ;
- figure 3 : représentation schématique d'une partie des premiers moyens de détermination du système de contrôle de l'invention, selon un deuxième exemple ;
- figure 4 : représentation schématique d'une partie des premiers moyens de détermination montés sur un véhicule, dans un exemple visant à augmenter l'angle au sommet du cône de détermination ;
- figure 5 : représentation schématique d'une partie des premiers moyens de détermination, dans un autre exemple visant à augmenter l'angle au sommet du cône de détermination ;
- figure 6 : représentation schématique de la détermination de cibles et de la ligne d'accostage par le système et le procédé de l'invention ;
- figure 7 : représentation schématique d'un exemple d'automate correspondant au fonctionnement des deuxièmes moyens de détermination du système de contrôle de l'invention ;
- figure 8 : représentation schématique d'un premier type d'ajustement de trajectoire par les deuxièmes moyens de détermination du système de contrôle de l'invention ;
- figure 9 : représentation schématique d'un deuxième type d'ajustement de trajectoire par les deuxièmes moyens de détermination du système de contrôle de l'invention.

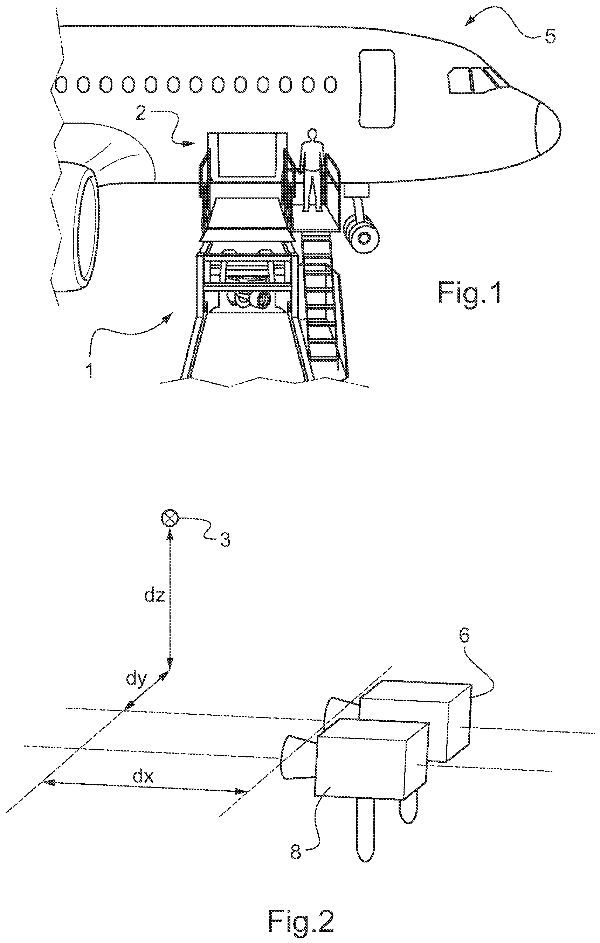

En figure 1, est représenté un exemple de véhicule aéroportuaire 1 qui est un chargeur de containers, en cours d'accostage à une zone d'accostage 2, qui est une porte 2, d'un aéronef 5 qui est un avion 5.

Le véhicule 1 est équipé du système de contrôle d'accostage de l'invention, et se déplace grâce à des moyens de roulement, typiquement un ou plusieurs trains de roues (non représentés sur la figure 1), contrôlés par des moyens de direction permettant d'orienter la mise en mouvement des moyens de roulement dans une direction donnée.

Les moyens de roulement sont reliés par ces moyens de direction au système de contrôle, pour permettre le guidage du véhicule 1 sur la trajectoire déterminée le système de contrôle tel qu'il sera expliqué ci-après sur un exemple de réalisation et de mise en oeuvre.

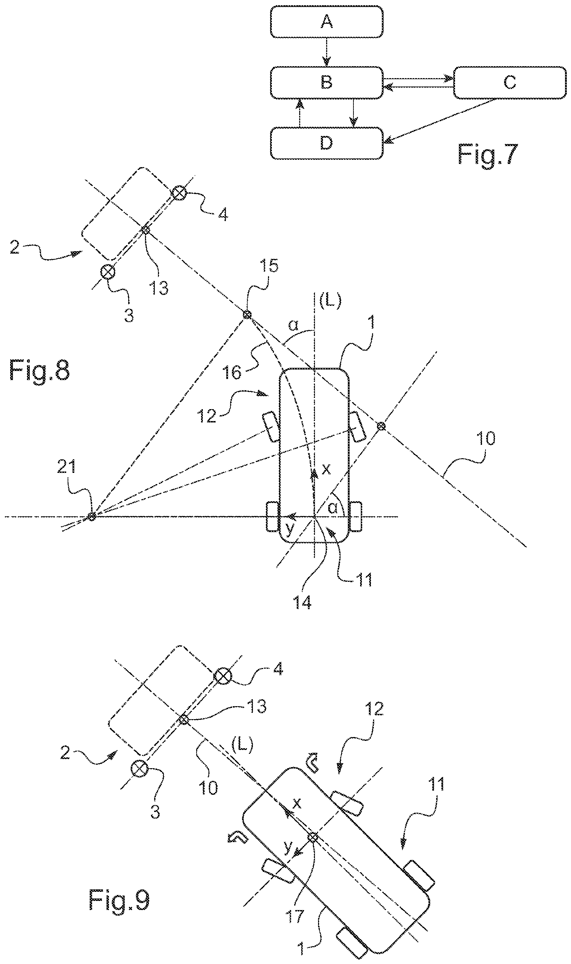

Comme on le verra ci-après plus en détail relativement aux figures 8 et 9, les moyens de roulement 11, 12 comprennent notamment un train avant 12. Le système de contrôle est relié aux moyens de roulement 11, 12 par les moyens de direction en sorte de permettre le guidage du véhicule 1 par contrôle de ce train avant 12.

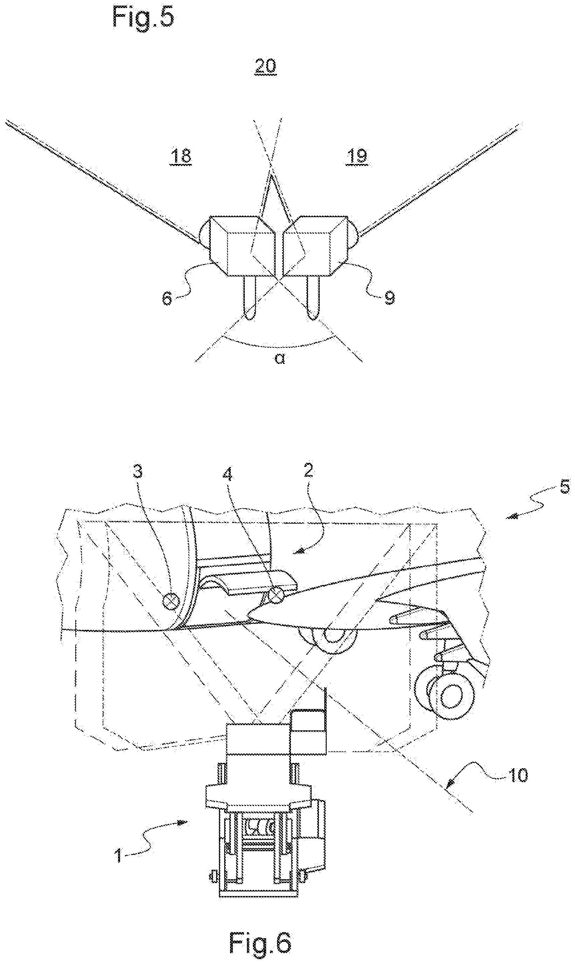

Comme on le voit plus précisément sur la figure 6 dans un exemple de réalisation, la zone d'accostage 2 de l'aéronef 5 est équipée d'une ou plusieurs cibles 3, 4, en l'espèce deux cibles 3, 4.

De telles cibles 3, 4 peuvent par exemple être incrustées ou peintes sur le fuselage de l'aéronef 5.

Le système de contrôle de l'invention comprend des premiers moyens de détermination, qui sont configurés pour déterminer le type de la ou des cibles 3, 4 parmi un ensemble de types de cible donnés. Ces moyens de détermination sont également configurés pour déterminer la position de chacune des cibles 3, 4.

Par ailleurs, le système de contrôle comprend des deuxièmes moyens de détermination, qui sont configurés pour déterminer une trajectoire de guidage du véhicule 1 vers la zone d'accostage 2, en fonction du type et de la position de la ou des cibles 3, 4.

Pour reconnaître le type des cibles 3, 4, les premiers moyens de détermination sont aptes à déterminer la taille et/ou la forme des cibles 3, 4, et à comparer cette taille et/ou cette forme avec des tailles et/ou formes stockées dans une base de données, embarquée ou distante. Ces formes et tailles de cible sont stockées dans la base de données en association avec des types de cible également stockés dans cette base de données.

Ainsi, en comparant les caractéristiques d'une cible 3, 4 donnée avec des caractéristiques stockées dans une base de données, les premiers moyens de détermination déduisent le type de la cible 3, 4 donnée.

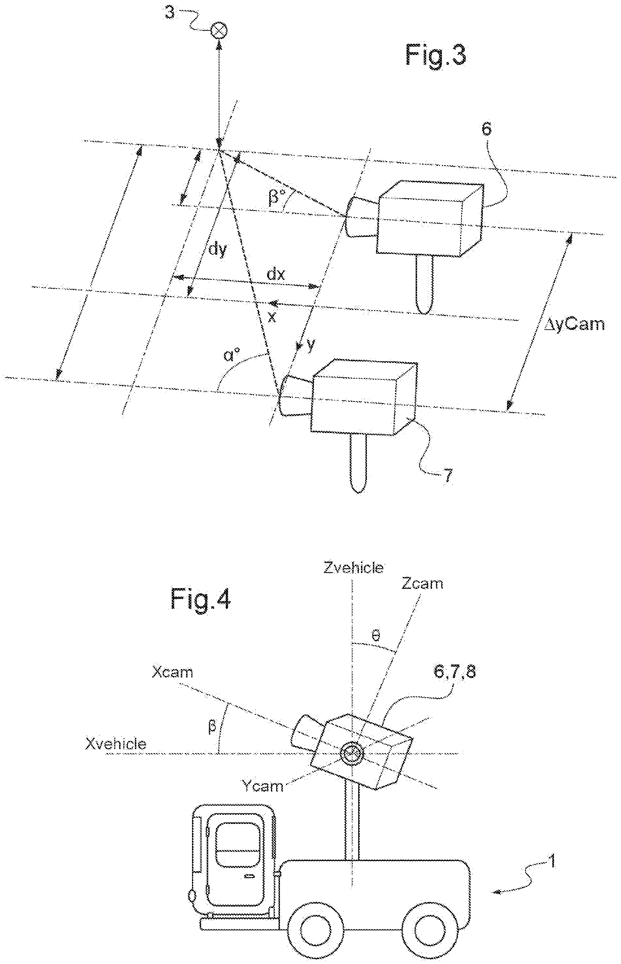

Les premiers moyens de détermination comprennent un dispositif de vision bidimensionnelle 6, représenté dans deux exemples dans les figures 2 et 3. Ce dispositif de vision bidimensionnelle 6 est apte à déterminer la taille et/ou la forme de la cible 3, 4, selon deux premières directions dy, dz.

Par ailleurs, les premiers moyens de détermination comprennent des moyens 7, 8 de détermination de la distance dx entre les premiers moyens de détermination eux-mêmes et la cible 3, 4, également représentés dans les deux exemples des figures 2 et 3 respectivement.

Dans l'exemple de la figure 2, les moyens 8 de détermination de la distance dx comprennent un dispositif de vision tridimensionnelle 8 ou un capteur de distance, qui peut par exemple être un capteur laser, un capteur à ultrason ou un radar.

Alternativement, dans l'exemple de la figure 3, la distance dx entre les premiers moyens de détermination et la cible 3, 4 est obtenue par triangulation, à partir du premier dispositif de vision bidimensionnelle 6 et d'un deuxième dispositif de vision bidimensionnelle 7.

Le système de contrôle de l'invention peut également comprendre des troisièmes moyens de détermination configurés pour déterminer le type de la destination d'accostage 5, que cette destination d'accostage 5 soit d'un avion 5 ou d'un bâtiment. Par exemple, dans le cas d'un avion 5, ces troisièmes moyens de détermination permettent de déterminer le type de l'avion 5, notamment sa marque, son type dans la marque, et sa version dans le type.

Par ailleurs, les deuxièmes moyens de détermination sont en outre aptes à déterminer une ou plusieurs zones d'exclusion en fonction du type de la destination d'accostage, en l'espèce de l'avion 5 dans notre exemple, pour faire en sorte que la trajectoire de guidage du véhicule 1 vers la zone de d'accostage 2 ne passe dans aucune de ces zones d'exclusion.

Pour ce faire, les troisièmes moyens de détermination déterminent un ou plusieurs paramètres d'au moins deux parties principales de l'avion 5. Ce ou ces paramètres peuvent être la taille et/ou la position relative de ces parties principales de l'avion 5.

Les troisièmes moyens de détermination comparent alors la valeur du ou des paramètres avec des valeurs de ces paramètres stockées dans une base de données, embarquée ou distante. Ces valeurs de paramètres sont stockées dans la base de données en association avec des types d'avion 5. Ainsi, en comparant les valeurs de paramètres déterminées avec les valeurs de paramètres stockées dans la base de données, les troisièmes moyens de détermination déduisent le type de l'avion 5.

Par exemple, la forme de l'avion 5 peut être analysée. De cette analyse, on déduit la position et la taille relatives de certaines parties principales de l'avion 5 (telles que les moteurs, les ailes, les, portes), qui sont comparées aux valeurs stockées dans la base de données.

Le type sélectionné dans la base de données sera celui pour lequel le nombre d'informations mesurées, comparées avec les valeurs stockées dans la base de données pour le type en question, est maximum.

Alternativement, le type de l'avion 5 peut être obtenu via un marqueur de type RFID lu par un lecteur approprié (ou par tout autre moyen de communication sans fil approprié au type du marqueur).

Alternativement encore, un identifiant de l'avion 5 permet à un opérateur de connaitre directement le modèle et le type de l'avion 5, informations qui peuvent alors être entrées par l'opérateur dans le système.

Les zones d'exclusion peuvent également dépendre de la séquence d'opérations au sol, dans le but d'optimiser la définition de la trajectoire et d'éviter les interférences avec d'autres équipements ou appareils impliqués dans l'assistance au sol à l'avion 5.

Pour déterminer les différentes tâches des opérations au sol, on peut utiliser les moyens de détermination présentés plus haut, pour reconnaître automatiquement le type et la position des appareils et équipements impliqués, qui seront comparés avec les informations relatives à la porte en laquelle l'accostage doit avoir lieu.

Le type des équipements et appareils en question peut aussi être déterminé au moyen de la lecture d'un marqueur de type RFID (ou autre type de marqueur lisible à distance par des moyens de lecture sans fil).

Il est également possible d'utiliser un identifiant des équipements et appareils en question, entrés par un opérateur dans le système.

On peut également utiliser une séquence d'opérations au sol prédéfinie. Dans ce cas, la séquence est déjà définie, et un nouvel appareil ou équipement arrivant dans la zone sait que d'autres appareils sont dans la zone, en fonction de sa position dans la séquence temporelle d'opérations. Cette séquence d'opération prédéfinie est stockée par exemple dans le véhicule, dans une base de données de séquences d'opérations au sol.

Cela permet de prendre en compte la séquence d'opérations en cours, l'opération en cours, et le type d'avion 5, en utilisant la base de données de séquences d'opérations au sol, en fonction de la porte en laquelle l'accostage doit avoir lieu.

Comme représenté dans les figures 4 et 5, on peut prévoir des moyens permettant d'augmenter l'angle de vue des premiers moyens de détermination, en particulier de dispositif de vision bidimensionnelle 6.

Dans l'exemple représenté sur la figure 4, le dispositif de vision bidimensionnel 6, tout comme les moyens 7, 8 de détermination de la distance dx entre les premiers moyens de détermination eux-mêmes et la cible 3, 4, sont montés sur le véhicule 1 par l'intermédiaire d'un mécanisme mobile en rotation dans au moins deux plans perpendiculaires, orienté en direction de la porte 2 de l'avion 5.

En fonction de la position de chacune des cibles 3, 4 dans le système de coordonnées du dispositif de vision bidimensionnelle 6, la position de ce dispositif 6 est ajustée en temps réel pour point cibleer au milieu des deux cibles 3, 4

Par ailleurs, la position du dispositif 6 par rapport au véhicule 1 est également mesurée pour déterminée la position relative de l'avion 5 par rapport au véhicule 1.

Dans l'exemple représenté sur la figure 5, le dispositif de vision bidimensionnelle 6 peut être combiné avec un autre dispositif de vision bidimensionnelle 9. L'écart entre les deux dispositifs 6 et 9 (positions et alignement) est déterminé, et les champs de vision respectifs 18 et 19 des deux dispositifs 6 et 9 sont combinés en un champ de vision étendu 20.

Ces deux exemples de réalisation permettent ainsi d'augmenter l'angle de vue du dispositif de vision bidimensionnel 6 des premiers moyens de détermination. En effet, du point cible de vue des deuxièmes moyens de détermination, l'angle entre le véhicule 1 et la ligne d'accostage 10, présentée ci-après notamment en référence à la figure 6, n'est pas limité au champ de vision du seul dispositif de vision bidimensionnelle 6. Ceci permet d'augmenter la capacité du système de l'invention en le rendant par exemple capable d'introduire des virages serrés dans la trajectoire de guidage déterminée.

Tel que représenté notamment sur la figure 6, dans un exemple d'accostage à la porte 2 d'un avion 5, la porte étant munie de deux cibles 3, 4, les deuxièmes moyens de détermination sont aptes à déterminer une ligne d'accostage 10. Cette ligne d'accostage 10 est la ligne passant par le point cible 13 situé à égal distance des deux cibles 3, 4 sur la surface de la zone d'accostage 2 et perpendiculaire à cette surface.

La trajectoire de guidage véhicule 1 vers la zone d'accostage 2 calculée par le système de l'invention est alors déterminée en sorte qu'elle se termine par une portion finale de la ligne d'accostage 10. La longueur de cette portion finale est supérieure ou égale à un seuil déterminé, de préférence supérieure ou égale à 2 mètres. Ceci garantit que le véhicule 1 guidé par le système de l'invention rejoint la ligne d'accostage 10 au moins deux mètres avant le fuselage de l'avion 5.

Ensuite, une fois la ligne d'accostage 10 rejointe par le véhicule 1, un conducteur peut par exemple reprendre la main pour conduire manuellement le véhicule jusqu'à la zone d'accostage 2 à très faible vitesse.

Tel que schématisé par l'automate représenté la figure 7, les deuxièmes moyens de détermination sont aptes à déterminer la trajectoire pour rejoindre la portion finale de la ligne d'accostage 10, en ajustant cette trajectoire à différents moments déterminés.

Après l'initialisation du guidage depuis l'état A, le système passe à l'état B et vérifie si le véhicule 1 se trouve à une distance supérieure à une distance donnée de la ligne d'accostage 10. Si tel est le cas, les deuxièmes moyens de détermination ajustent la trajectoire en vue d'aligner le véhicule 1 avec la ligne d'accostage 10, c'est-à-dire d'aligner le train arrière 11 du véhicule 1 avec la ligne d'accostage 10.

Cette opération d'ajustement de la trajectoire en vue d'aligner le véhicule 1 avec la ligne d'accostage 10, est répétée à intervalles, tant que le véhicule 1 se trouve à une distance supérieure à une distance donnée de la ligne d'accostage 10.

Cette opération est schématisée plus en détail sur la figure 8. Un point cible 15 est déterminé sur la ligne d'accostage 10, et une trajectoire 16 permettant au véhicule 1 de rejoindre le point cible 15 est déterminée. Ce point cible 15 correspond donc au point cible de la ligne d'accostage 10 en lequel le véhicule 1 cherche à intercepter cette ligne d'accostage 10.

La détermination du point cible 15 est fonction de la distance longitudinale entre le véhicule 1 et la zone d'accostage 2, de la distance latérale entre le véhicule 1 et la ligne d'accostage 10, et de l'angle α entre l'axe longitudinal L du véhicule 1 et la ligne d'accostage 10.

La distance latérale entre le véhicule 1 et la ligne d'accostage 10 est mesurée à partir du centre 14 du train arrière 11 du véhicule 1.

La distance longitudinale entre le véhicule 1 et la zone d'accostage 2 est quant à elle mesurée à partir du centre 14 du train arrière 11 du véhicule 1.

Comme représenté sur la figure 8, la trajectoire 16 pour permettre au véhicule 1 de rejoindre le point cible 15 forme un arc de cercle 16. Cet arc de cercle 16 part du centre 14 du train arrière 11 du véhicule 1, et va jusqu'au point cible 15. Le rayon de cet arc de cercle 16 est déterminé par la formule (X² + Y²) / (2 × Y), dans laquelle X et Y correspondent aux coordonnées du point cible 15 par rapport au centre 14 du train arrière 11 du véhicule 1.

Comme on peut le voir schématisé sur cette figure 8, pour suivre la trajectoire en arc de cercle 16, les roues du train avant 12 sont orientées l'axe perpendiculaire à la direction de chacune de ces roues et passant par le centre de ces roues, passe par le centre 21 du cercle qui supporte la trajectoire 16 en arc de cercle.

Lorsque les deuxièmes moyens de détermination déterminent que le véhicule 1 est proche d'être aligné avec la ligne d'accostage 10, c'est-à-dire lorsque le véhicule 1 se trouve à une distance inférieure à la distance donnée de la ligne d'accostage 10, le système passe à l'état C représenté sur la figure 7.

Les deuxièmes moyens de détermination cherchent alors à aligner plus finement le véhicule 1 avec la ligne d'accostage 10, c'est-à-dire à aligner le train avant 12 du véhicule 1 avec la ligne d'accostage 10.

Cette opération est schématisée plus en détail sur la figure 9. Les deuxièmes moyens de détermination orientent les roues du train avant 12 du véhicule 1 selon un angle qui dépend de la distance entre le centre 17 de ce train avant 12 et la ligne d'accostage 10.

Depuis l'état B ou l'état C, le système peut passer dans l'état D, dit « mode sombre », lorsque le niveau de confiance dans la localisation des cibles 3, 4, déterminé par les premiers moyens de détermination, est inférieur à un seuil donné, ou lorsque les premiers moyens de détermination ne détectent plus les cibles 3, 4.

Dans ce cas, les deuxièmes moyens de détermination décident de conserver la trajectoire déterminée au moment précédent.

La position des cibles peut alors être estimée en mesurant la trajectoire du véhicule à l'aide d'un odomètre et l'angle des roues avant. La trajectoire du véhicule est alors recalculée par rapport à la position des cibles estimée.

Ainsi, pour résumer, à chaque moment déterminé, les deuxièmes moyens de détermination procèdent à un ajustement de la trajectoire du véhicule 1 pour rejoindre la ligne d'accostage.

En priorité, si, et tant que, le train arrière 11 du véhicule 1 n'est pas proche d'être aligné avec la ligne d'accostage 10, au sens expliqué ci-dessus, un ajustement de l'alignement du train arrière 11 est mis en oeuvre (état B sur la figure 7, et exemple de mise en oeuvre sur la figure 8).

Dès que le train arrière 11 est proche d'être aligné avec la ligne d'accostage 10, au sens expliqué ci-dessus, si, et tant que le train avant 12 n'est pas considéré comme aligne avec la ligne d'accostage 10, un ajustement plus fin de l'alignement est mis en oeuvre, par alignement du train avant 12 avec la ligne d'accostage 10 (état C sur la figure 7, et exemple de mise en oeuvre sur la figure 9).

A chaque moment, que l'on soit dans l'état B ou dans l'état C, le système vérifie si le niveau de confiance dans la localisation des cibles 3, 4, déterminé par les premiers moyens de détermination, est supérieur à un seuil donné, et si les premiers moyens de détermination détectent toujours les cibles 3, 4. Si tel n'est pas le cas, les deuxièmes moyens de détermination conservent la trajectoire déterminée au moment précédent sans l'ajuster.

Pour un véhicule aéroportuaire 1 remplissant une fonction particulière au moyen d'un outil particulier, tel que le chargement de bagages au moyen d'un chargeur à bande, on peut également prévoir que le système de l'invention comprenne des moyens permettant de mesurer la distance entre l'outil en question et la zone d'accostage 2, et sa hauteur par rapport à la zone d'accostage. Cette mesure peut notamment être obtenue par triangulation à partir de la localisation des cibles 3, 4, au moyen des dispositif 6, 7, 8 présenté plus au haut relativement aux premiers moyens de détermination.

Lorsque le véhicule 1 est à l'arrêt, en position devant la zone d'accostage 2, après guidage selon la trajectoire déterminée par le système de l'invention, la position de l'outil peut ainsi être automatiquement ajustée.

Le système de l'invention est un système électronique destiné à être embarqué dans le véhicule 1, comprenant une ou plusieurs mémoires de stockage d'information pour stocker les informations, et une ou plusieurs unités de traitement de ces informations, permettant la mise en oeuvre des fonctions des premiers, deuxièmes et troisièmes moyens de détermination.

Les modes de réalisation présentées ci-dessus concernent la détermination, par les deuxièmes moyens de détermination, de la trajectoire de guidage du véhicule 1 vers la zone d'accostage 2 en fonction de la position de la zone d'accostage 2 déterminée par les premiers moyens de détermination, par détermination du type et de la position d'une ou plusieurs cibles 3, 4 associées à la zone d'accostage 2.

Un exemple plus détaillé est donnée ci-avant concernant l'utilisation d'au moins deux cibles 3 et 4.

Une autre variante existe avec l'utilisation d'une seule cible 3 ou 4 associée à la zone d'accostage 2. Dans ce cas, les deuxièmes moyens de détermination mesurent l'alignement entre le véhicule 1 et la zone d'accostage 2 en analysant au moins une partie du profil de la destination d'accostage 5, c'est-à-dire, dans le cas d'un aéronef 5, la ligne de fuselage de cet aéronef 5. Le point cible 13, situé sur la surface de la zone d'accostage 2, à partir duquel s'étend la ligne d'accostage 10 perpendiculairement à cette surface de la zone d'accostage 2, est alors déterminé en fonction du type de la destination d'accostage 5 et/ou de la zone d'accostage 2 déterminé par ladite analyse, ou éventuellement par les troisièmes moyens de détermination présentés plus haut.

D'autres modes de réalisation sont possibles pour la détermination par les deuxièmes moyens de détermination, de la trajectoire de guidage du véhicule 1 vers la zone d'accostage 2 en fonction de la position de la zone d'accostage 2 elle-même déterminée par les premiers moyens de détermination, sans l'utilisation de cibles 3, 4 associées à la zone d'accostage 2. Les premiers moyens de détermination peuvent alors déterminer une représentation tridimensionnelle de la destination d'accostage 5 et réaliser une ou plusieurs mesures dans cette représentation tridimensionnelle pour déterminer cette position de la zone d'accostage 2.

On peut par exemple utiliser une base de données de mesures et comparer les mesures réalisées avec les mesures stockées dans cette base de données, pour déterminer le contour de la zone d'accostage 2 et sa position relativement à une ou plusieurs autres zones de la destination d'accostage 5.

La présente description est donnée à titre d'exemple et n'est pas limitative de l'invention.

En particulier, il est rappelé que le système de l'invention n'est pas limité au contrôle de l'accostage d'un véhicule aéroportuaire à la porte d'un aéronef tel qu'un avion, mais s'étend au contrôle de l'accostage de n'importe quel type de véhicule à n'importe quel type d'aéronef, voire à un autre véhicule quelconque ou à un bâtiment quelconque.

## Revendications

1. Système électronique de contrôle de l'accostage d'un véhicule (1), tel qu'un véhicule aéroportuaire (1), à une zone d'accostage (2) donnée d'une destination d'accostage (5) d'un aéronef (5) ou d'un bâtiment, la zone d'accostage (2) donnée comprenant au moins une cible (3, 4), le système comprenant des premiers moyens de détermination configurés pour déterminer la position de la zone d'accostage (2) par détermination du type de la cible (3, 4) parmi un ensemble de types donnés et de sa position, des deuxièmes moyens de détermination configurés pour déterminer une trajectoire de guidage du véhicule (1) vers ladite zone d'accostage (2) donnée fonction du type et de la position de ladite cible (3, 4), et des troisièmes moyens de détermination configurés pour déterminer le type de la destination d'accostage (5), les deuxièmes moyens de détermination étant aptes à déterminer une ou plusieurs zones d'exclusion en fonction du type de la destination d'accostage (5), par comparaison du type de la destination d'accostage (5) avec des types de destination d'accostage, stockés dans une base de données en association avec des zones d'exclusion, de sorte que la trajectoire de guidage du véhicule (1) vers la zone de d'accostage (2) donnée ne passe dans aucune desdites zones d'exclusion, **caractérisé en ce que** les deuxièmes moyens de détermination sont aptes à déterminer une ligne d'accostage (10) passant par un point (13) situé sur la surface de la zone d'accostage (2) et perpendiculaire à cette surface, de sorte que la trajectoire de guidage du véhicule (1) vers la zone d'accostage (2) se termine par une portion finale de ladite ligne d'accostage (10) d'une longueur supérieure ou égale à un seuil déterminé, supérieure ou égale à 2 mètres, les deuxièmes moyens de détermination étant aptes à déterminer la trajectoire pour rejoindre la portion finale de la ligne d'accostage (10) en ajustant ladite trajectoire à différents moments déterminés, en vue, à chacun desdits moments:
- d'aligner le train arrière (11) du véhicule (1) avec la ligne d'accostage (10) dans le cas où ledit véhicule (1) se trouve à une distance supérieure à une distance donnée de la ligne d'accostage (10) ;
- d'aligner le train avant (12) du véhicule (1) avec la ligne d'accostage (10) dans le cas où ledit véhicule (1) se trouve à une distance inférieure à la distance donnée de la ligne d'accostage;
- de conserver la trajectoire déterminée au moment précédent, si le niveau de confiance dans la localisation des cibles (3, 4) déterminé par les premiers moyens de détermination est inférieur à un seuil donné, ou si les premiers moyens de détermination ne détectent plus les cibles (3, 4).

2. Système selon la revendication1, la zone d'accostage (2) donnée étant une zone d'accostage d'une destination d'accostage (5) d'un aéronef (5) ou d'un bâtiment, **caractérisé en ce que** les premiers moyens de détermination sont aptes à déterminer une représentation tridimensionnelle de la destination d'accostage (5), et à réaliser une ou plusieurs mesures dans ladite représentation tridimensionnelle, pour déterminer la position de la zone d'accostage (2).

3. Système selon la revendication 2, **caractérisé en ce que** les premiers moyens de détermination sont aptes à comparer les mesures avec des mesures stockées dans une base de données, pour en déduire le contour de la zone d'accostage (2) et sa position relativement à au moins une autre zone de la destination d'accostage (5).

4. Système selon l'une quelconque des revendications 1 à 3, **caractérisé en ce que** les premiers moyens de détermination sont aptes à déterminer la taille et/ou la forme de la cible (3, 4), à comparer la taille et/ou la forme déterminée avec des tailles et/ou formes stockées dans une base de données en association avec des types de cible également stockés dans ladite base de données, pour en déduire le type de la cible (3, 4).

5. Système selon la revendication 4, **caractérisé en ce que** les premiers moyens de détermination comprennent un dispositif de vision bidimensionnelle (6) apte à déterminer la taille et/ou la forme de la cible (3, 4) et des moyens (7, 8) de détermination de la distance entre les premiers moyens de détermination et la cible (3, 4).

6. Système selon la revendication 5, **caractérisé en ce que** les moyens (7) de détermination de la distance comprennent un dispositif de vision tridimensionnelle (7) ou un capteur de distance tel qu'un capteur laser, à ultrason ou radar.

7. Système selon l'une quelconque des revendications 1 à 6, la zone d'accostage (2) donnée étant une zone d'accostage d'une destination d'accostage (5) d'un aéronef (5) ou d'un bâtiment, **caractérisé en ce qu'**il comprend des troisièmes moyens de détermination configurés pour déterminer le type de la destination d'accostage (5) et/ou le type de la zone d'accostage (2).

8. Système selon l'une quelconque des revendications 1 à 7, **caractérisé en ce que** les deuxièmes moyens de détermination sont aptes à mesurer l'alignement entre le véhicule (1) et la zone d'accostage (2) par analyse d'au moins une partie du profil de la destination d'accostage (5), tel que la ligne de fuselage de l'aéronef (5), à proximité de la cible (3, 4), et à déterminer le point (13) en fonction du type de la destination d'accostage (5) et/ou de la zone d'accostage (2).

9. Système selon l'une quelconque des revendications 1 à 8, la zone d'accostage (2) donné comprenant au moins deux cibles (3, 4), **caractérisé en ce que** le point (13) est situé à égale distance desdites cibles (3, 4).

10. Système selon l'une quelconque des revendications 1 à 9, **caractérisé en ce que** les deuxièmes moyens de détermination sont aptes à ajuster la trajectoire à chacun des moments déterminés, et dans le cas où le véhicule (1) se trouve à une distance supérieure à la distance donnée de la ligne d'accostage, en :
- déterminant un point cible (15) sur la ligne d'accostage (10)
- définissant une trajectoire (16) pour permettre au véhicule (1) de rejoindre le point cible (15).

11. Système selon la revendication 10, **caractérisé en ce que** la détermination du point cible (15) est fonction de la distance longitudinale entre le véhicule (1) et la zone d'accostage (2), de la distance latérale entre le véhicule (1) et la ligne d'accostage (10), et de l'angle (α) entre l'axe longitudinal (L) du véhicule (1) et la ligne d'accostage (10).

12. Système selon la revendications 11, **caractérisé en ce que** la trajectoire (16) pour permettre au véhicule (1) de rejoindre le point cible (15) forme un arc de cercle (16) allant du centre (14) du train arrière (11) du véhicule (1) au point cible (15) et de rayon déterminé par la formule (X² + Y²) / (2 × Y), avec X et Y correspondant aux coordonnées du point cible (15) par rapport au centre (14) du train arrière (11) du véhicule (1)..

13. Système selon l'une quelconque des revendications 1 à 12, **caractérisé en ce que** les deuxièmes moyens de détermination sont aptes à ajuster la trajectoire à chacun des moments déterminés, et dans le cas où le véhicule (1) se trouve à une distance inférieure à la distance donnée de la ligne d'accostage (10), en orientant les roues du train avant (12) du véhicule (1) selon un angle dépendant de la distance entre le centre (17) dudit train avant (12) et la ligne d'accostage (10).

14. Véhicule (1), tel qu'un véhicule aéroportuaire, comprenant des moyens de roulement (11, 12) aptes à permettre la mise en mouvement du véhicule (1) par roulement, des moyens de direction aptes à permettre d'orienter la mise en mouvement dans une direction donnée, et un système électronique de contrôle d'accostage selon l'une quelconque des revendications 1 à 13, les moyens de roulement (11, 12) étant reliés par les moyens de direction au système de contrôle, en sorte de permettre le guidage du véhicule (1) sur la trajectoire déterminée par les deuxièmes moyens de détermination dudit système de contrôle.

15. Véhicule (1) selon la revendication 14, **caractérisé en ce que** les moyens de roulement (11, 12) comprennent un train avant (12), et **en ce que** le système de contrôle est relié aux moyens de roulement (11, 12) par les moyens de direction en sorte de permettre le guidage du véhicule (1) par contrôle du train avant (12).

16. Procédé de contrôle de l'accostage d'un véhicule (1), tel qu'un véhicule véhicule aéroportuaire (1), à une zone d'accostage (2) donnée d'une destination d'accostage (5) d'un aéronef (5) ou d'un bâtiment, la zone d'accostage (2) donnée comprenant au moins une cible (3, 4), le procédé comprenant une première étape de détermination de la position de la zone d'accostage (2) par détermination du type de la cible (3, 4) parmi un ensemble de types donnés et de sa position, une deuxième étape de détermination d'une trajectoire de guidage du véhicule (1) vers la zone d'accostage (2) fonction du type et de la position de ladite cible (3, 4), et une troisième étape de détermination du type de la destination d'accostage (5), la deuxième étape de détermination comprenant la détermination d'une ou plusieurs zones d'exclusion en fonction du type de la destination d'accostage (5), par comparaison du type de la destination d'accostage (5) avec des types de destination d'accostage, stockés dans une base de données en association avec des zones d'exclusion, de sorte que la trajectoire de guidage du véhicule (1) vers la zone de d'accostage (2) donnée ne passe dans aucune desdites zones d'exclusion, **caractérisé en ce qu'**au cours de la deuxième étape de détermination, on détermine une ligne d'accostage (10) passant par un point (13) situé sur la surface de la zone d'accostage (2) et perpendiculaire à cette surface, de sorte que la trajectoire de guidage du véhicule (1) vers la zone d'accostage (2) se termine par une portion finale de la ligne d'accostage (10) d'une longueur supérieure ou égale à un seuil déterminé, supérieure ou égale à 2 mètres, et **en ce qu'**au cours de la deuxième étape de détermination, on détermine la trajectoire pour rejoindre la portion finale de la ligne d'accostage (10) en ajustant ladite trajectoire à différents moments déterminés, en vue, à chacun desdits moments :
- d'aligner le train arrière (11) du véhicule (1) avec la ligne d'accostage (10) dans le cas où ledit véhicule (1) se trouve à une distance supérieure à une distance donnée de la ligne d'accostage (10) ;
- d'aligner le train avant (12) du véhicule (1) avec la ligne d'accostage (10) dans le cas où ledit véhicule (1) se trouve à une distance inférieure à la distance donnée de la ligne d'accostage (10) ;
- de conserver la trajectoire déterminée au moment précédent, si le niveau de confiance dans la localisation des cibles (3, 4) lors de la première étape de détermination est inférieur à un seuil donné, ou si les cibles (3, 4) ne sont plus détectées.

17. Procédé selon la revendication 16, la zone d'accostage (2) étant une zone d'accostage (2) d'une destination d'accostage (5), **caractérisé en ce qu'**au cours de la première étape de détermination, on détermine une représentation tridimensionnelle de la destination d'accostage (5), et on réalise une ou plusieurs mesures dans ladite représentation tridimensionnelle, pour déterminer la position de la zone d'accostage.

18. Procédé selon la revendication 17, **caractérisé en ce qu'**au cours de la première étape de détermination, on compare les mesures avec des mesures stockées dans une base de données, pour en déduire le contour de la zone d'accostage (2) et sa position relativement à au moins une autre zone de la destination d'accostage (5).

19. Procédé selon l'une quelconque des revendications 16 à 18, **caractérisé en ce qu'**au cours de la première étape de détermination, on détermine la taille et/ou la forme de la cible (3, 4), on compare la taille et/ou la forme déterminée avec des tailles et/ou formes stockées dans une base de données en association avec des types de cible également stockés dans ladite base de données, pour en déduire le type de la cible (3, 4)..

20. Procédé selon l'une quelconque des revendications 16 à 19, **caractérisé en ce qu'**au cours de la deuxième étape de détermination, on mesure l'alignement entre véhicule (1) et la zone d'accostage (2) par analyse d'au moins une partie du profil de la destination d'accostage (5), tel que la ligne de fuselage de l'aéronef (5), à proximité de la cible (3, 4).

21. Procédé selon l'une quelconque des revendications 16 à 20, la zone d'accostage (2) comprenant au moins deux cibles (3, 4), **caractérisé en ce que** le point cible (13) est situé à égale distance desdites cibles (3, 4).

22. Procédé selon l'une quelconque des revendications 16 à 21, **caractérisé en ce qu'**au cours de la deuxième étape de détermination, on détermine la trajectoire pour rejoindre la portion finale de la ligne d'accostage (10) en ajustant ladite trajectoire à différents moments déterminés, en vue, à chacun desdits moments :
- d'aligner le train arrière (11) du véhicule (1) avec la ligne d'accostage (10) dans le cas où ledit véhicule (1) se trouve à une distance supérieure à une distance donnée de la ligne d'accostage (10) ;
- d'aligner le train avant (12) du véhicule (1) avec la ligne d'accostage (10) dans le cas où ledit véhicule (1) se trouve à une distance inférieure à la distance donnée de la ligne d'accostage (10) ;
- de conserver la trajectoire déterminée au moment précédent, si le niveau de confiance dans la localisation des cibles (3, 4) lors de la première étape de détermination est inférieur à un seuil donné, ou si les cibles (3, 4) ne sont plus détectées.

23. Procédé selon l'une quelconque des revendications 16 à 22, **caractérisé en ce qu'**au cours de la deuxième étape, à chacun des moments déterminés, et dans le cas où le véhicule (1) se trouve à une distance supérieure à la distance donnée de la ligne d'accostage (10), on ajuste la trajectoire en :
- déterminant un point cible (15) sur la ligne d'accostage (10) ;
- définissant une trajectoire (16) pour permettre au véhicule (1) de rejoindre le point cible (15).

24. Procédé selon la revendication 23, **caractérisé en ce que** la détermination du point cible (15) est fonction de la distance longitudinale entre le véhicule (1) et la zone d'accostage (2), de la distance latérale entre le véhicule (1) et la ligne d'accostage (10), et de l'angle (α) entre l'axe longitudinal (L) du véhicule (1) et la ligne d'accostage (10).

25. Procédé selon l'une quelconque des revendications 23 à 24, **caractérisé en ce que** la trajectoire (16) pour permettre au véhicule (1) de rejoindre le point cible (15) forme un arc de cercle (16) allant du centre (14) du train arrière (11) du véhicule (1) au point cible (15) et de rayon déterminé par la formule (X² + Y²) / (2 × Y), avec X et Y correspondant aux coordonnées du point cible (15) par rapport au centre (14) du train arrière (11) du véhicule (1).

26. Procédé selon l'une quelconque des revendications 16 à 25, **caractérisé en ce qu'**au cours de la deuxième étape de détermination, à chacun des moments déterminés, et dans le cas où le véhicule (1) se trouve à une distance inférieure à la distance donnée de la ligne d'accostage (10), on ajuste la trajectoire en orientant les roues du train avant (12) du véhicule (1) selon un angle dépendant de la distance entre le centre (17) dudit train avant (12) et la ligne d'accostage (10).

## Patentansprüche

1. Elektronisches Andocksystem zur Steuerung des Andockens eines Fahrzeugs (1), wie eines Flughafenfahrzeugs (1), an eine gegebene Andockzone (2) eines Andockziels (5) eines Luftfahrzeugs (5) oder eines Gebäudes, wobei die gegebene Andockzone (2) mindestens ein Zielobjekt (3, 4) umfasst, wobei das System umfasst:
erste Bestimmungsmittel, die konfiguriert sind, die Position der Andockzone (2) durch Bestimmung des Typs des Zielobjekts (3, 4) aus einer gegebenen Menge von Typen und dessen Position zu bestimmen,
zweite Bestimmungsmittel, die konfiguriert sind, eine Führungsbahn des Fahrzeugs (1) zur genannten gegebenen Andockzone (2) in Abhängigkeit vom Typ und der Position des genannten Zielobjekts (3, 4) zu bestimmen,
dritte Bestimmungsmittel, die konfiguriert sind, den Typ des Andockziels (5) zu bestimmen,
wobei die zweiten Bestimmungsmittel in der Lage sind, eine oder mehrere Ausschlusszonen in Abhängigkeit vom Typ des Andockziels (5) durch Vergleich des Typs des Andockziels (5) mit in einer Datenbank gespeicherten Andockzieltypen, die mit Ausschlusszonen verknüpft sind, zu bestimmen, sodass die Führungsbahn des Fahrzeugs (1) zur gegebenen Andockzone (2) in keiner der genannten Ausschlusszonen verläuft,
**dadurch gekennzeichnet, dass** die zweiten Bestimmungsmittel in der Lage sind, eine Andocklinie (10) zu bestimmen, die durch einen Punkt (13) verläuft, der sich auf der Oberfläche der Andockzone (2) befindet und senkrecht zu dieser Oberfläche ist, sodass die Führungsbahn des Fahrzeugs (1) zur Andockzone (2) in einem letzten Abschnitt der genannten Andocklinie (10) endet, wobei diese eine Länge hat, die größer oder gleich einem bestimmten Schwellenwert ist, vorzugsweise mindestens 2 Meter,
wobei die zweiten Bestimmungsmittel in der Lage sind, die Führungsbahn zu verschiedenen bestimmten Zeitpunkten anzupassen, um zu jedem dieser Zeitpunkte:
- das Hinterrad (11) des Fahrzeugs (1) mit der Andocklinie (10) auszurichten, falls sich das genannte Fahrzeug (1) in einer Entfernung zur Andocklinie (10) befindet, die größer ist als eine vorgegebene Entfernung,
- das Vorderrad (12) des Fahrzeugs (1) mit der Andocklinie (10) auszurichten, falls sich das genannte Fahrzeug (1) in einer Entfernung zur Andocklinie (10) befindet, die kleiner ist als die vorgegebene Entfernung,
- die zuvor bestimmte Führungsbahn beizubehalten, falls das Vertrauen in die Lokalisierung der Zielobjekte (3, 4), das durch die ersten Bestimmungsmittel bestimmt wurde, unter einem gegebenen Schwellenwert liegt oder falls die ersten Bestimmungsmittel die Zielobjekte (3, 4) nicht mehr erkennen.

2. System nach Anspruch 1, wobei die gegebene Andockzone (2) eine Andockzone eines Andockziels (5) eines Luftfahrzeugs (5) oder eines Gebäudes ist, **dadurch gekennzeichnet, dass** die ersten Bestimmungsmittel in der Lage sind, eine dreidimensionale Darstellung des Andockziels (5) zu bestimmen und eine oder mehrere Messungen in der genannten dreidimensionalen Darstellung durchzuführen, um die Position der Andockzone (2) zu bestimmen.

3. System nach Anspruch 2, **dadurch gekennzeichnet, dass** die ersten Bestimmungsmittel in der Lage sind, die Messungen mit in einer Datenbank gespeicherten Messungen zu vergleichen, um daraus die Kontur der Andockzone (2) und deren Position relativ zu mindestens einer anderen Zone des Andockziels (5) abzuleiten.

4. System nach einem der Ansprüche 1 bis 3, **dadurch gekennzeichnet, dass** die ersten Bestimmungsmittel in der Lage sind, die Größe und/oder die Form des Zielobjekts (3, 4) zu bestimmen und die ermittelte Größe und/oder Form mit in einer Datenbank gespeicherten Größen und/oder Formen zu vergleichen, die in Verbindung mit ebenfalls in der Datenbank gespeicherten Zielobjekttypen gespeichert sind, um daraus den Typ des Zielobjekts (3, 4) abzuleiten.

5. System nach Anspruch 4, **dadurch gekennzeichnet, dass** die ersten Bestimmungsmittel ein zweidimensionales Vision-Gerät (6) umfassen, das in der Lage ist, die Größe und/oder die Form des Zielobjekts (3, 4) zu bestimmen, sowie Mittel (7, 8) zur Bestimmung des Abstands zwischen den ersten Bestimmungsmitteln und dem Zielobjekt (3, 4).

6. System nach Anspruch 5, **dadurch gekennzeichnet, dass** die Mittel (7) zur Bestimmung des Abstands ein dreidimensionales Vision-Gerät (7) oder einen Abstandssensor, wie einen Lasersensor, Ultraschallsensor oder Radarsensor, umfassen.

7. System nach einem der Ansprüche 1 bis 6, wobei die gegebene Andockzone (2) eine Andockzone eines Andockziels (5) eines Luftfahrzeugs (5) oder eines Gebäudes ist, **dadurch gekennzeichnet, dass** es dritte Bestimmungsmittel umfasst, die konfiguriert sind, um den Typ des Andockziels (5) und/oder den Typ der Andockzone (2) zu bestimmen.

8. System nach einem der Ansprüche 1 bis 7, **dadurch gekennzeichnet, dass** die zweiten Bestimmungsmittel in der Lage sind, die Ausrichtung zwischen dem Fahrzeug (1) und der Andockzone (2) durch Analyse von mindestens einem Teil des Profils des Andockziels (5), wie der Rumpflinie des Luftfahrzeugs (5), in der Nähe des Zielobjekts (3, 4) zu messen und den Punkt (13) in Abhängigkeit vom Typ des Andockziels (5) und/oder der Andockzone (2) zu bestimmen.

9. System nach einem der Ansprüche 1 bis 8, wobei die gegebene Andockzone (2) mindestens zwei Zielobjekte (3, 4) umfasst, **dadurch gekennzeichnet, dass** der Punkt (13) in gleichem Abstand zu den genannten Zielobjekten (3, 4) liegt.

10. System nach einem der Ansprüche 1 bis 9, **dadurch gekennzeichnet, dass** die zweiten Bestimmungsmittel in der Lage sind, die Führungsbahn zu jedem der bestimmten Zeitpunkte anzupassen und, falls sich das Fahrzeug (1) in einer Entfernung zur Andocklinie befindet, die größer ist als die vorgegebene Entfernung, indem sie:
- einen Zielpunkt (15) auf der Andocklinie (10) bestimmen
- eine Führungsbahn (16) definieren, die es dem Fahrzeug (1) ermöglicht, den Zielpunkt (15) zu erreichen.

11. System nach Anspruch 10, **dadurch gekennzeichnet, dass** die Bestimmung des Zielpunkts (15) in Abhängigkeit vom longitudinalen Abstand zwischen dem Fahrzeug (1) und der Andockzone (2), dem seitlichen Abstand zwischen dem Fahrzeug (1) und der Andocklinie (10) sowie dem Winkel (α) zwischen der Längsachse (L) des Fahrzeugs (1) und der Andocklinie (10) erfolgt.

12. System nach Anspruch 11, **dadurch gekennzeichnet, dass** die Führungsbahn (16), die es dem Fahrzeug (1) ermöglicht, den Zielpunkt (15) zu erreichen, einen Kreisbogen (16) bildet, der vom Zentrum (14) des Hinterrads (11) des Fahrzeugs (1) zum Zielpunkt (15) verläuft und dessen Radius durch die Formel (X² + Y²) / (2 × Y) bestimmt wird, wobei X und Y den Koordinaten des Zielpunkts (15) relativ zum Zentrum (14) des Hinterrads (11) des Fahrzeugs (1) entsprechen.

13. System nach einem der Ansprüche 1 bis 12, **dadurch gekennzeichnet, dass** die zweiten Bestimmungsmittel in der Lage sind, die Führungsbahn zu jedem der bestimmten Zeitpunkte anzupassen, und im Falle, dass sich das Fahrzeug (1) in einer Entfernung zur Andocklinie (10) befindet, die kleiner als die vorgegebene Entfernung ist, die Räder des Vorderrads (12) des Fahrzeugs (1) in einem Winkel auszurichten, der von der Entfernung zwischen dem Zentrum (17) des genannten Vorderrads (12) und der Andocklinie (10) abhängt.

14. Fahrzeug (1), wie ein Flughafenfahrzeug, umfassend Fahrmittel (11, 12), die es ermöglichen, das Fahrzeug (1) durch Rollen in Bewegung zu setzen, Steuerungsmittel, die es ermöglichen, die Bewegung in eine bestimmte Richtung zu lenken, und ein elektronisches Andocksystem nach einem der Ansprüche 1 bis 13, wobei die Fahrmittel (11, 12) über die Steuerungsmittel mit dem Steuersystem verbunden sind, um die Führung des Fahrzeugs (1) auf der von den zweiten Bestimmungsmitteln des genannten Steuersystems bestimmten Führungsbahn zu ermöglichen.

15. Fahrzeug (1) nach Anspruch 14, **dadurch gekennzeichnet, dass** die Fahrmittel (11, 12) ein Vorderrad (12) umfassen und dass das Steuersystem über die Steuerungsmittel mit den Fahrmitteln (11, 12) verbunden ist, um die Führung des Fahrzeugs (1) durch Steuerung des Vorderrads (12) zu ermöglichen.

16. Verfahren zur Steuerung des Andockens eines Fahrzeugs (1), wie eines Flughafenfahrzeugs (1), an eine gegebene Andockzone (2) eines Andockziels (5) eines Luftfahrzeugs (5) oder eines Gebäudes, wobei die gegebene Andockzone (2) mindestens ein Zielobjekt (3, 4) umfasst, umfassend einen ersten Schritt zur Bestimmung der Position der Andockzone (2) durch Bestimmung des Typs des Zielobjekts (3, 4) aus einer gegebenen Menge von Typen und dessen Position, einen zweiten Schritt zur Bestimmung einer Führungsbahn des Fahrzeugs (1) zur Andockzone (2) in Abhängigkeit vom Typ und der Position des genannten Zielobjekts (3, 4), und einen dritten Schritt zur Bestimmung des Typs des Andockziels (5), wobei der zweite Bestimmungsschritt die Bestimmung einer oder mehrerer Ausschlusszonen in Abhängigkeit vom Typ des Andockziels (5) umfasst, durch Vergleich des Typs des Andockziels (5) mit in einer Datenbank gespeicherten Andockzieltypen, die mit Ausschlusszonen verknüpft sind, sodass die Führungsbahn des Fahrzeugs (1) zur gegebenen Andockzone (2) in keiner der genannten Ausschlusszonen verläuft,
**dadurch gekennzeichnet, dass** im Laufe des zweiten Bestimmungsschritts eine Andocklinie (10) bestimmt wird, die durch einen Punkt (13) verläuft, der sich auf der Oberfläche der Andockzone (2) befindet und senkrecht zu dieser Oberfläche ist, sodass die Führungsbahn des Fahrzeugs (1) zur Andockzone (2) in einem letzten Abschnitt der genannten Andocklinie (10) endet, mit einer Länge, die größer oder gleich einem bestimmten Schwellenwert ist, vorzugsweise mindestens 2 Meter, und dass während des zweiten Bestimmungsschritts die Führungsbahn zur Erreichung des letzten Abschnitts der Andocklinie (10) durch Anpassung der genannten Führungsbahn zu verschiedenen bestimmten Zeitpunkten bestimmt wird, um zu jedem der genannten Zeitpunkte:
- das Hinterrad (11) des Fahrzeugs (1) mit der Andocklinie (10) auszurichten, falls sich das genannte Fahrzeug (1) in einer Entfernung zur Andocklinie (10) befindet, die größer als eine vorgegebene Entfernung ist;
- das Vorderrad (12) des Fahrzeugs (1) mit der Andocklinie (10) auszurichten, falls sich das genannte Fahrzeug (1) in einer Entfernung zur Andocklinie (10) befindet, die kleiner als die vorgegebene Entfernung ist;
- die zuvor bestimmte Führungsbahn beizubehalten, falls das Vertrauen in die Lokalisierung der Zielobjekte (3, 4) während des ersten Bestimmungsschritts unter einem bestimmten Schwellenwert liegt oder falls die Zielobjekte (3, 4) nicht mehr erkannt werden.

17. Verfahren nach Anspruch 16, wobei die gegebene Andockzone (2) eine Andockzone eines Andockziels (5) ist, **dadurch gekennzeichnet, dass** im Laufe des ersten Bestimmungsschritts eine dreidimensionale Darstellung des Andockziels (5) bestimmt wird und eine oder mehrere Messungen in der genannten dreidimensionalen Darstellung durchgeführt werden, um die Position der Andockzone zu bestimmen.

18. Verfahren nach Anspruch 17, **dadurch gekennzeichnet, dass** im Laufe des ersten Bestimmungsschritts die Messungen mit in einer Datenbank gespeicherten Messungen verglichen werden, um daraus die Kontur der Andockzone (2) und deren Position relativ zu mindestens einer anderen Zone des Andockziels (5) abzuleiten.

19. Verfahren nach einem der Ansprüche 16 bis 18, **dadurch gekennzeichnet, dass** im Laufe des ersten Bestimmungsschritts die Größe und/oder die Form des Zielobjekts (3, 4) bestimmt wird und die bestimmte Größe und/oder Form mit in einer Datenbank gespeicherten Größen und/oder Formen verglichen wird, die in Verbindung mit ebenfalls in der Datenbank gespeicherten Zielobjekttypen gespeichert sind, um daraus den Typ des Zielobjekts (3, 4) abzuleiten.

20. Verfahren nach einem der Ansprüche 16 bis 19, **dadurch gekennzeichnet, dass** im Laufe des zweiten Bestimmungsschritts die Ausrichtung zwischen dem Fahrzeug (1) und der Andockzone (2) durch Analyse von mindestens einem Teil des Profils des Andockziels (5), wie der Rumpflinie des Luftfahrzeugs (5), in der Nähe des Zielobjekts (3, 4) gemessen wird.

21. Verfahren nach einem der Ansprüche 16 bis 20, wobei die Andockzone (2) mindestens zwei Zielobjekte (3, 4) umfasst, **dadurch gekennzeichnet, dass** der Zielpunkt (13) in gleichem Abstand zu den genannten Zielobjekten (3, 4) liegt.

22. Verfahren nach einem der Ansprüche 16 bis 21, **dadurch gekennzeichnet, dass** im Laufe des zweiten Bestimmungsschritts die Führungsbahn zur Erreichung des letzten Abschnitts der Andocklinie (10) durch Anpassung der genannten Führungsbahn zu verschiedenen bestimmten Zeitpunkten bestimmt wird, um zu jedem der genannten Zeitpunkte:
- das Hinterrad (11) des Fahrzeugs (1) mit der Andocklinie (10) auszurichten, falls sich das genannte Fahrzeug (1) in einer Entfernung zur Andocklinie (10) befindet, die größer als eine vorgegebene Entfernung ist;
- das Vorderrad (12) des Fahrzeugs (1) mit der Andocklinie (10) auszurichten, falls sich das genannte Fahrzeug (1) in einer Entfernung zur Andocklinie (10) befindet, die kleiner als die vorgegebene Entfernung ist;
- die zuvor bestimmte Führungsbahn beizubehalten, falls das Vertrauen in die Lokalisierung der Zielobjekte (3, 4) während des ersten Bestimmungsschritts unter einem bestimmten Schwellenwert liegt oder falls die Zielobjekte (3, 4) nicht mehr erkannt werden.

23. Verfahren nach einem der Ansprüche 16 bis 22, **dadurch gekennzeichnet, dass** im Laufe des zweiten Bestimmungsschritts, zu jedem der bestimmten Zeitpunkte und im Fall, dass sich das Fahrzeug (1) in einer Entfernung zur Andocklinie (10) befindet, die größer als die vorgegebene Entfernung ist, die Führungsbahn angepasst wird durch:
- Bestimmen eines Zielpunkts (15) auf der Andocklinie (10);
- Definieren einer Führungsbahn (16), die es dem Fahrzeug (1) ermöglicht, den Zielpunkt (15) zu erreichen.

24. Verfahren nach Anspruch 23, **dadurch gekennzeichnet, dass** die Bestimmung des Zielpunkts (15) in Abhängigkeit vom longitudinalen Abstand zwischen dem Fahrzeug (1) und der Andockzone (2), dem seitlichen Abstand zwischen dem Fahrzeug (1) und der Andocklinie (10) sowie dem Winkel (α) zwischen der Längsachse (L) des Fahrzeugs (1) und der Andocklinie (10) erfolgt.

25. Verfahren nach einem der Ansprüche 23 bis 24, **dadurch gekennzeichnet, dass** die Führungsbahn (16), die es dem Fahrzeug (1) ermöglicht, den Zielpunkt (15) zu erreichen, einen Kreisbogen (16) bildet, der vom Zentrum (14) des Hinterrads (11) des Fahrzeugs (1) zum Zielpunkt (15) verläuft und dessen Radius durch die Formel (X^2 + Y^2) / (2 × Y) bestimmt wird, wobei X und Y den Koordinaten des Zielpunkts (15) relativ zum Zentrum (14) des Hinterrads (11) des Fahrzeugs (1) entsprechen.

26. Verfahren nach einem der Ansprüche 16 bis 25, **dadurch gekennzeichnet, dass** im Laufe des zweiten Bestimmungsschritts, zu jedem der bestimmten Zeitpunkte und im Fall, dass sich das Fahrzeug (1) in einer Entfernung zur Andocklinie (10) befindet, die kleiner als die vorgegebene Entfernung ist, die Führungsbahn durch Ausrichten der Räder des Vorderrads (12) des Fahrzeugs (1) in einem Winkel angepasst wird, der von der Entfernung zwischen dem Zentrum (17) des genannten Vorderrads (12) und der Andocklinie (10) abhängt.

## Claims

1. Electronic system for controlling docking of a vehicle (1), such as an airport's vehicule, at a given docking zone (2) of a docking destination (5) of a docking destination (5) of an airplan (5) or of a building, the given docking zone (5) comprising at least one target (3,4), the system comprising first means for determining configured for determining the docking zone's (2) position by determining the type of the target (3,4) from a set of given types and from its position, second means for determining configured for determining a guidance trajectory of the vehicle (1) to said docking zone (2) depending on the type and on the position of said target (3,4), and third means for determining configured for determining the type of the docking destination (5), the second determination being suitable for determining one or more exclusion zones depending on a type of the docking destination (5), by comparison of the type of the docking destination with types of docking destination stored in a database in association with exclusion zones so that the guidance trajectory of the vehicle (1) to the given docking zone (2) does not pass into any of the exclusion zones, **characterized in that** the second means for determining are suitable to determine a docking line (10) passing through a target (13) situated on a surface of the docking zone (2) and perpendicular to said surface, so that the guidance trajectory of the vehicle (1) to the docking zone (2) is terminated by a final portion of said docking line (10) with a length greater than or equal to a determined threshold greater than or equal to 2 meters, the second means for determining being suitable for said trajectory for going to the final portion of the docking line (10) by adjusting the trajectory at different predetermined moments, in order, at each of the predetermined moments:
- to align the rear suspension (11) of the vehicle (1) with the docking line (10) when said vehicle is located at a distance greater than a given distance from the docking line (10);
- to align a front suspension (12) of the vehicle (1) with the docking line (10) when said vehicle (1) is located at a distance less than the given distance from the docking line; and
- to retain the trajectory determined at a preceding moment if the confidence level in locating the targets (3, 4) determined the first means for determining is less than a given threshold, or if the first means for determining are no longer detecting the targets (3, 4).

2. system according to claim 1, the given docking zone (2) being a docking destination (5) of a docking destination (5) of an airplan (5) or of a building, **characterised in that** the first means for determining being suitable for determining a three-dimensional representation of the docking destination (5), and atoll performs one or more measurements in the three-dimensional representation, to determine the position of the docking zone (2).

3. System according to claim 2, wherein the first means for determining are suitable for comparing the measurements with measurements stored in a database and determines a contour of the docking zone (2) and its position relative to at least one other zone of the docking destination (5).

4. System according to any one from claims 1 to 3, **characterized in that** the first means for determining is suitable for determining size and/or the shape of the target (3, 4), and for comparing the size and/or the shape with sizes and/or shapes stored in a database in association with types of targets also stored in said database, to deduce a target type therefrom.

5. System according to claim 4, **characterized in that** the first means for determining includes a two-dimensional vision device (6) suitable to determine the size and/or the shape of the target (3, 4) and means (7, 8) for determining of the distance between the first means for determining and the target (3, 4).

6. System according to claim 5, **characterized in that** the means (7) for determining of the distance include a three- dimensional vision device (7) or a distance sensor such as a laser sensor, an ultrasound sensor or a radar sensor.

7. System according to any one of claim 1 to 6, the given docking zone (2) being a docking destination (5) of a docking destination (5) of an airplane (5) or of a building, characterized it includes third means for determining configured for determining the type of the docking destination (5) and/or the type of the docking zone (2).

8. System according to any one of claim 1 to 7, **characterized in that** the second means for determining are suitable for measuring the alignment between the vehicle (1) and the docking zone (2) by analysis of at least a part of a profile of the docking destination, such as a fuselage line of the airplane (5), in proximity to the target (3, 4), and for determining the point (13) depending on the type of the docking destination and/or of given docking zone (2).

9. System according to any one of claim 1 to 8, the given docking zone (2) including at least two target (3, 4), **characterized in that** the point (13) is positioned at equal distance from said targets (3, 4).

10. System according to any one from claims 1 to 9, **characterized in that** the second means for determining are suitable to adjust the trajectory at each of the predetermined moments, and when the vehicle (1) is located at a distance greater than the given distance from the docking line, by:
- determining the target point (15) on the docking line (10);
- defining a trajectory (16) to allow the vehicle (1) to reach the target point (15).

11. System according to any one from claims 1 to 10, **characterized in that** the determining of the target point (15) based on a longitudinal distance between the vehicle (1) and the docking zone (2), on the lateral distance between the vehicle (1) and the docking line (10), and the angle (α) between a longitudinal axis (L) of the vehicle (1) and the docking line (10).

12. System according to claim 11, **characterized in that** the guidance trajectory allows the vehicle (1) to reach the target point (15) and forms a circular arc (16) extending from a center (14) of a rear suspension (11) of the vehicle (1) to the target point (15), with a radius determined by a formula (X²+Y²)/(2×Y), with X and Y corresponding to coordinates of the target point (15) relative to the center (14) of the rear suspension (11) of the vehicle (1).

13. System according to any one from claims 1 to 12, **characterized in that** the second means for determining are suitable for adjusting the trajectory at each of the predetermined moments, and when the vehicle (1) is located at a distance less than a given distance from the docking line (10), by orienting wheels of the front suspension (12) of the vehicle (1) at an angle depending on the distance between the center (17) of said front suspension (12) and the docking line (10).

14. Vehicle (1) such an airport's vehicle, comprising rolling means (11, 12) suitable to allow movement of the vehicle (1) by rolling, a steering means configured to allow orienting the movement in a given direction, and electronic system for controlling docking according to any one of claim 1 to 13, the rolling means (11, 12) being connected by the steering means to the control system, so as to allow the guidance of the vehicle (1) on the trajectory determined by the control system of control system.

15. Vehicle according to claim 14, characterizes in that the rolling means (11, 12) comprising a front suspension (12), and the control system being connected to rolling means (11, 12) by the steering means so as to allow the guidance of the vehicle (1) by control of the front suspension (12).

16. Method for controlling docking of a vehicle(1), such as a airport's vehicle, at a given docking zone (2) of a docking destination (5) of a airplane (5) or a building, the given docking zone (2) comprising at least one target (3, 4), the method comprising a first step of determining a position of the given docking zone (2) by determining a type of target (3, 4) from a set of given types and from its position, a second step of determining a guidance trajectory of the vehicle (1) to the given docking zone depending on the type and depending on a position of the target (3, 4); and a third step of determining a type of the docking destination (5), the second step of determining comprising determining one or more exclusion zones depending on a type of the docking destination (5), by comparison of the type of the docking destination with types of docking destination stored in a database in association with exclusion zones so that the guidance trajectory of the vehicle (1) to the given docking zone (2) does not pass into any of the exclusion zones, **characterized in that** during the second step of determining it is determined a docking line (10) passing through a target (13) situated on a surface of the docking zone (2) and perpendicular to said surface, so that the guidance trajectory of the vehicle (1) to the docking zone (2) is terminated by a final portion of said docking line (10) with a length greater than or equal to a determined threshold greater than or equal to 2 meters, and I that during the second step for determining, it is detemine the trajectory for going to the final portion of the docking line (10) by adjusting the trajectory at different predetermined moments, in order, at each of the predetermined moments:
- to align the rear suspension (11) of the vehicle (1) with the docking line (10) when said vehicle is located at a distance greater than a given distance from the docking line (10);
- to align a front suspension (12) of the vehicle (1) with the docking line (10) when said vehicle (1) is located at a distance less than the given distance from the docking line; and
- to retain the trajectory determined at a preceding moment if the confidence level in locating the targets (3, 4) determined the first means for determining is less than a given threshold, or if the first means for determining are no longer detecting the targets(3, 4).

17. Method according to claim 16, the given docking zone (2) being a docking destination (5) of a docking destination (5) of an airplan (5) or of a building, **characterised in that** during the first step of determining, it is determines a three-dimensional representation of the docking destination (5), and atoll performs one or more measurements in the three-dimensional representation, to determine the position of the docking zone (2).

18. Method according to claim 17, **characterized in that** during the first step for determining, it is compared the measurements with measurements stored in a database, and determines a contour of the docking zone (2) and its position relative to at least one other zone of the docking destination (5).

19. Method according to any one from claims 16 to 18, **characterized in that**, during the first step for determining, it is determined size and/or the shape of the target (3, 4), and for comparing the size and/or the shape with sizes and/or shapes stored in a database in association with types of targets also stored in said database, to deduce a target type therefrom.

20. Method according to any one from claims 16 to 19, **characterized in that**, during the second step for determining, it is measured the alignment between the vehicle (1) and the docking zone (2) by analysis of at least a part of a profile of the docking destination, such as a fuselage line of the airplane (5), in proximity to the target (3, 4).

21. Method according to any one from claims 16 to 20, the given docking zone (2) including at least two target (3, 4), **characterized in that** the point (13) is positioned at equal distance from said targets (3, 4).

22. Method according to any one from claims 16 to 21, **characterized in that** during the step of determined, it is determined the trajectory for going to the final portion of the docking line (10) by adjusting the trajectory at different predetermined moments, in order, at each of the predetermined moments:
- to align the rear suspension (11) of the vehicle (1) with the docking line (10) when said vehicle is located at a distance greater than a given distance from the docking line (10);
- to align a front suspension (12) of the vehicle (1) with the docking line (10) when said vehicle (1) is located at a distance less than the given distance from the docking line; and
- to retain the trajectory determined at a preceding moment if the confidence level in locating the targets (3, 4) determined the first means for determining is less than a given threshold, or if the first means for determining are no longer detecting the targets(3, 4).

23. Method according to any one from claims 16 to 22, **characterized in that** during the second step, at each of the predetermined moments, and when the vehicle (1) is located at a distance greater than the given distance from the docking line, it is adjusted the trajectory by:
- determining the target point (15) on the docking line (10);
- defining a trajectory (16) to allow the vehicle (1) to reach the target point (15).

24. Method according to claim 23, **characterized in that** the determining of the target point (15) based on a longitudinal distance between the vehicle (1) and the docking zone (2), on the lateral distance between the vehicle (1) and the docking line (10), and the angle (α) between a longitudinal axis (L) of the vehicle (1) and the docking line (10).

25. Method according to any one of claim 23 to 24, **characterized in that** trajectory (16) for allowing the vehicle (1) to reach the target point (15) forms a circular arc (16) extending from a center (14) of a rear suspension (11) of the vehicle (1) to the target point (15), with a radius determined by a formula (X²+Y²)/(2×Y), with X and Y corresponding to coordinates of the target point (15) relative to the center (14) of the rear suspension (11) of the vehicle (1).

26. Method according to any one of claim 16 to 25, **characterized in that** during the second step of determining, at each of the predetermined moments, and when the vehicle (1) is located at a distance less than a given distance from the docking line (10), it is adjusted the trajectory by orienting wheels of the front suspension (12) of the vehicle (1) at an angle depending on the distance between the center (17) of said front suspension (12) and the docking line (10).
